# EUROPEAN PATENT SPECIFICATION

(11) **EP 0 940 819 B1**
(45) Date of publication and mention of the grant of the patent: **19.11.2003**
(21) Application number: 99103092.5
(22) Date of filing: 17.02.1999
(51) Int. Cl.: H01B 3/30, H01B 7/28

(54) **Electrical cable with self-repairing protection**
Elektrisches Kabel mit selbstheilendem Kabelschutz
Câble électrique avec protection autocicatrisante

(30) Priority: 04.03.1998 EP 98103767
(43) Date of publication of application: 08.09.1999
(73) Proprietor: PIRELLI S.p.A., 20126 Milano (IT)
(72) Inventor: Belli, Sergio, 57126 Livorno (IT); Caimi, Luigi, 23871 Lomagna (LC) (IT); Bosisio, Claudio, 24041 Brembate (BG) (IT); Bareggi, Alberto, 20133 Milano (IT); Balconi, Luca, 20091 Bresso (MI) (IT); Pozzati, Giovanni, 21057 Olgiate Olona (VA) (IT)
(74) Representative: Giannesi, Pier Giovanni

(56) References cited:
- EP-A- 0 288 869
- GB-A- 1 364 200
- GB-A- 2 032 678
- US-A- 4 785 163
- US-A- 5 313 020

## Description

The present invention relates to a cable, in particular a cable for electric power transmission or distribution or for telecommunications. More particularly, the present invention relates to a cable as defined above comprising at least one coating layer and having self-repairing protection which is capable of restoring the continuity of the coating layer after it has been broken.

Electrical cables, in particular low- or medium-voltage cables for the distribution of electric energy for domestic or industrial use, generally consist of one or more conductors individually insulated by a polymeric material and coated with a protective sheath, which is also made of a polymeric material. These cables, particularly when installed underground, in tunnels or inside buried pipes, are subject to damage on these layers caused by various types of mechanical abuses, for example accidental impact with sharp tools such as shovels or picks, which exert on the cable both cutting and compression action. This can lead to partial or total rupture of the outer sheath and possibly also of the insulating layer, with consequent infiltration of moisture and generation of leakage currents. If the rupture of the coating layers reaches the conductor, the combined effect of leakage currents and moisture leads to a gradual corrosion of the conductor until, at the utmost, to a complete breakage of the conductor itself.

To obtain effective protection against such mechanical abuses, the cable can be provided with an outer structure capable of withstanding both cutting and compression, this outer structure consisting, for example, of a sheath made of a metal or of a plastic material combined with metal armouring. Besides being expensive, this solution leads to a considerable increase in cable dimensions and rigidity, thus making this solution unsuitable for cables which require easiness of installation and low costs, such as, in particular, in the case of low-voltage cables.

In patent application GB-2,032,678 an electrical power conductive cable is described which comprises one or more conductors provided with an insulating layer, a metal screen, an outer jacket, and between the metal screen and outer jacket at least one separating layer around the metal screen and at least one outer layer of a paste material having a high degree of water resistance and in which one or more humidity reducing materials are incorporated. The abovementioned cable is said to have an improved resistance to corrosion e.g. due to mechanical damage of the outer jacket or sheath as well as an improved resistance to formation of the so-called "water trees".

In patent US-5,313,020 a twin-axial cable is described which comprises a central core with two conductors helically wrapped around it. The relative placement of the two conductors on the core is accomplished by interspersing a plurality of spacers between the conductors on the surface of the core. A dielectric barrier encases the core, conductors and spacers. Because each type of twin-axial transmission cable has its own electrical and mechanical requirements, the cable has a design that can be easily altered before manufacturing to meet the varying needs. By selecting among the many dielectrics materials available to manufacture these elements, as well as selecting the physical dimensions of the elements, the electrical and mechanical characteristics can be "tuned" to meet specific requirements. The abovementioned cable is said to have a high degree of flexing endurance, compactness, and improved mechanical and electric characteristics.

In patent application EP-0 288 869 a method of extending the serviceable life of a stranded conductor electrical distribution cable is described wherein the interstices of the conductor are filled with a curable silicone water block composition which is subsequently cured to a non-flowing state. The composition has a low viscosity and comprises (A) an Si-H endblocked polydiorganosiloxane fluid, (B) a polydiorganosiloxane fluid endblocked with an unsaturated organic radical, (C) a siloxane crosslinker, (D) a hydrosilation catalyst and (E) a polymerization inhibitor. The abovementioned composition is said to improve also the electrical breakdown point of the cable.

In patent GB-1,364,200 a composition for filling insulated electrical-type cable having a polyethylene insulated core is described. More in particular, a cable filling composition having polybutene as its major constituent is described. The abovementioned composition is said to have a good compatibility with polyethylene, low permittivity and desirable electrical performance over the working temperature range of the cable without adversely affecting the handling characteristics of the cable or unduly complicating the method of splicing.

In patent application DE-1,590,958 a telecommunications or high-current cable is described which is protected from mechanical damage by means of an outer sheath having, on its inside, microcapsules containing a liquid which is capable of solidifying rapidly once the microcapsule has been broken. To this purpose, it is mentioned as preferred the use of the two components commonly used for manufacturing expanded polyurethane, these components being microencapsulated separately so that they react together at the moment the microcapsules are broken, forming an expanded material which closes the accidental cut. Alternatively, it is possible to use liquids which solidify when placed in contact with external agents, for example with moisture.

According to the Applicant, the solution proposed in the above-mentioned patent application is difficult to implement in practice and has many drawbacks. Firstly, it is to be observed that the possibility of self-repairing is limited to the outer sheath, and no indications regarding the possibility of restoring integrity of the insulating layer are provided. Moreover, to obtain an effective self-repairing effect, it is necessary to introduce a large amount of microencapsulated material during sheath extrusion, and this operation can result to be extremely difficult, besides being expensive. Lastly, it is to be pointed out that the mechanism of action of the microcapsules is irreversible, consequently the self-repairing effect can be carried out only once, namely at the moment the microcapsules are broken. Actually, during the various stages of the cable life (manufacturing, storage, installation, use), the coating layers are inevitably subjected to external mechanical actions of compression and bending and to thermal cycles of expansion and compression, which can lead to rupture of the microcapsules with consequent expansion and/or solidification of the material contained therein. Therefore, this material will no longer be able to effect the desired self-repairing action when the sheath should actually be damaged. It is also to be noted that, even when microcapsules are used containing a liquid material which solidifies on contact with moisture, accidental rupture of the microcapsules without any actual damage to the outer sheath nonetheless leads to solidification of the material because residual moisture is always present inside the cable.

The Applicant has now found that, in consequence of a mechanical damage which creates a discontinuity in at least one of the cable coating layers, it is possible to obtain effective self-repairing of the coating by virtue of the presence of an inner layer, placed, for example, between the insulating layer and the outer sheath, this inner layer comprising a material having a predetermined cohesiveness and at the same time a controlled flowability, which is capable of repairing the damage by restoring the continuity of the coating layer. After creation of a discontinuity in the coating, the material "moves" towards the point of damage and fills up, at least partly, the discontinuity by forming a substantially continuous layer which is capable of maintaining the functionality of the cable under the expected working conditions. The action of the self-repairing material, which occurs with a revesible mechanism, prevents, among other things, moisture infiltration and establishment of leakage currents, and thus a quick corrosion of the conductor.

The flowability of the material is predetermined so as to have sufficient fluidity at the working temperature of the cable, and at the same time so as to prevent the material from draining from the cable extremities or leaking in an uncontrolled manner from the coating rupture point.

In a first aspect the present invention thus relates to a cable according to claim 1.

According to a preferred aspect, the cable according to the present invention comprises an insulating coating layer and an outer sheath, and is characterized in that the inner layer is placed between the insulating layer and the outer sheath.

According to another embodiment of the present invention, the inner layer is placed between the conductor and the insulating layer.

According to a further embodiment, the cable according to the present invention comprises at least two insulating coating layers and is characterized in that the inner layer is placed between two of the said insulating layers.

According to a further aspect, the present invention relates to a method for imparting to a cable comprising a conductor and at least one coating layer a capacity of self-repairing the coating layer, characterized in that the said method comprises providing the cable with an inner layer comprising a material having the capacity, upon creation of a discontinuity in the coating layer, of re-establishing the continuity in the coating layer in a reversible manner.

In the description hereinbelow and in the claims, the material which constitutes the inner layer will be referred to, for simplicity, as the "self-repairing material".

The term "inner layer" is understood herein to refer to a layer placed in any position between the conductor and the outermost coating layer, for example between the conductor and the insulating layer or, preferably, between the insulating layer and the outer sheath. Alternatively, when at least two insulating layers are present, the self-repairing layer can be placed between two of the said insulating layers.

The expression "discontinuity in at least one of the coating layers" is understood herein to refer to a partial or complete rupture of that layer. In the case of partial rupture only part of the thickness of the coating layer has been damaged, whereas there is complete rupture when the layer has been cut throughout its thickness. Needless to say, a partial rupture may become complete over time, for example following tractional or flexural mechanical stresses or alternatively as a result of thermal cycles of expansion and contraction to which the cable is subjected during use.

The expression "re-establishing the continuity" is understood herein to mean refill, at least partially, a point of rupture which has been created in the cable coating, so as to maintain the functionality of the cable at least for a predetermined period of time, and preferably for the entire period of the life of the cable, at least under the normal conditions of use. In other words, the self-repairing material is capable of preventing or at least slowing down the degradation of the materials constituting the cable, and in particular of the conductor, due to the infiltration of external agents through the point of discontinuity.

The Applicant has noted that, for the purposes of the present invention, the desired self-repairing of the cable is obtained by using a material having a predetermined cohesiveness and a controlled flowability. Although high cohesiveness values are considered desirable for the purposes of self-repairing, it is clear that these high values may conflict with flowability. A person skilled in the art will be capable of selecting the most suitable material, in which the desired compromise between cohesion and fluidity is achieved as a function of the specific cable which it is desired to manufacture and, above all, as a function of the conditions of installation and use envisaged for this cable, in particular in terms of temperature and pressure.

The self-repairing material is a dielectric material which is capable of re-establishing the electrical insulation of the cable. This property is particularly important in the case where mechanical damage is such as to cause in the insulating layer a partial or complete rupture, i.e. up to reaching the conductor. In general, dielectric rigidity values, under alternating current, of greater than 15 kV/mm, preferably greater than 20 kV/mm, and resistivity values of greater than 10¹⁴ Ω·cm, preferably greater than 10¹⁶ Ω·cm, are sufficient.

As mentioned above, the self-repairing material has predetermined cohesiveness which is such that, following the creation of a discontinuity in this material, for example by the action of a cutting tool, and once the cause of the discontinuity has been removed, the molecules which constitute the self-repairing material are capable of spontaneously recreating intermolecular bonds that are sufficient to restore continuity of the material. This phenomenon is of a reversible kind, i.e. the self-repairing material is capable of effectively carrying out its function an indefinite number of times.

For the purposes of the present invention, the expression "cohesiveness of the self-repairing material" refers both to the actual cohesive force up to detachment (referred to hereinbelow more simply as "cohesive force"), i.e. the force per surface area unit required to cause within the mass of a sample of material a complete detachment of one part of the material from the remaining part, and to the force of re-cohesion (or of auto-adhesion), that is the force required to recreate a complete detachment within the material once two portions of this material have been placed in contact for a predetermined time and under predetermined pressure and temperature conditions. In other words, the cohesiveness of the self-repairing material must be assessed both as regards the strength of intermolecular forces which hold the material together thereby ensuring its integrity, and as regards its capacity to recreate these intermolecular bonds spontaneously once they have been broken by the intervention of an external force.

The cohesive force can be measured according to the method given in the examples hereinafter. It has been found that cohesive force values, measured at room temperature, of at least 0.05 kg/cm² ensure a sufficient cohesiveness of the self-repairing material, although values of between 0.1 and 4 kg/cm² are preferred, and even more preferably between 0.2 and 2 kg/cm².

The force of re-cohesion can be evaluated empirically by placing, one on top of the other, two disks of material of predetermined dimensions and leaving the two disks in contact for a predetermined time at room temperature. At the end of this period, the force required to separate the two disks is measured. The closer this force is to the intrinsic cohesive force value of the material as such, the more the material is capable of re-unifying spontaneously after damage, thus reforming a continuous material. In practice, the Applicant has found that in the self-repairing materials according to the present invention, the force of re-cohesion is preferably substantially identical to the cohesive force as defined above, and at least has a value not less than 80%, preferably not less than 90%, relative to the cohesive force measured on the material as such.

In the Applicant's perception, another property of the self-repairing material according to the present invention is its controlled flowability, i.e. the self-repairing material must be capable of "moving" so as to migrate towards the point of rupture of the coating in an amount which is sufficient to repair the damage.

On the other hand, as already mentioned above, the flowability of the self-repairing material must be controlled in such a way as to avoid loss of material either by drainage from the extremities of the cable or by leaking from the point of rupture of the coating. This control of the flowability must be ensured not only at ambient temperature but also at higher temperatures, for example at the maximum working temperature envisaged for the cable (usually 75-90°C).

It might be thought that the flowability of the self-repairing material could be evaluated on the basis of viscosity measurements. Actually, for the purposes of the present invention, the Applicant believes that a viscosity measurement is not significant per se, besides being not easy to carry out, in particular for materials with semi-solid properties. The Applicant has therefore found that it is more convenient to evaluate empirically the flowability of the self-repairing material by means of a test in which the displacement of a predetermined amount of material placed on an inclined plane at a predetermined temperature and for a predetermined period is measured. This test is described in the technical specification ST/LAB/QFE/06, § 5.5, established by France Telecom/CNET (published: January 1994). In particular, this evaluation can be carried out as follows. About 3 grams of self-repairing material are placed on a smooth aluminium plate inclined at 60° relative to the horizontal plane. The material constituting the plate is selected so as to ensure high adhesion of the test material to the plate itself, thereby preventing the material from sliding down the plate without undergoing a substantial deformation. The plate is placed in an oven thermostatically adjusted to 60°C; after 24 hours the material is checked for any demixing of the various components present therein, and displacement of the material front down the inclined plane, relative to its initial position, is measured, for example by means of a gauge, checking that there has been essentially no sliding of the entire mass.

In practice, the Applicant has found that the desired control of the flowability is obtained when the self-repairing material, subjected to the flow test on an inclined plane at 60°C for 24 hours described above, shows a displacement of the front of the material sample on the inclined plane of between 0.5 and 400 mm, preferably between 1 and 200 mm and even more preferably between 50 and 100 mm.

Moreover, the Applicant believes that the "movement" of the self-repairing material towards the point of rupture is promoted by the action of radial compression exerted on the self-repairing layer by the other layers constituting the cable, in particular by the outer sheath. Indeed, the specific volume of plastics decreases as the temperature decreases, thus during the cooling process following extrusion the outer sheath contracts to produce a radial compressing action on underlying layers, with an estimated pressure of the order of a few bar. In the case of rupture of the cable coating, this pressure forces the self-repairing material towards the point of rupture, thereby assisting the self-repairing. Moreover, the Applicant has observed that the leakage of self-repairing material from the point of rupture stops rapidly by virtue of the cohesive properties of this material.

Another advantageous property of the self-repairing material is its capacity to exert an effective blocking action against external moisture which tends to infiltrate the cable through the point of rupture of the coating. For this purpose, it is appropriate for the self-repairing material to have a low saturation water content, with values, measured at room temperature by Karl-Fisher titration, generally of less than 400 ppm, preferably less than 200 ppm.

Moreover, in the case where the self-repairing layer is placed outside the insulating layer and the latter consists of a material which is crosslinkable via silanes, it is convenient for the self-repairing material, although absorbing small amounts of moisture, to have a sufficient permeability to water vapour since, as is known, crosslinking via silanes takes place in the presence of water. Preferred values of permeability to water vapour, measured at room temperature according to ASTM E96, are generally between 1.2 × 10⁻⁷ and 8.0 × 10⁻⁶ g/(cm·hour·mmHg).

A further preferred characteristic of the self-repairing material is a substantial physico-chemical inertness with respect to the plastic materials with which it is placed in contact. The reason for this is that it is desirable that the self-repairing material does not interact, under the working conditions, with the materials which constitute adjacent layers (generally polyolefins such as polyethylene and ethylene copolymers, which may or may not be crosslinked), thereby avoiding swelling phenomena for these materials with a consequent worsening in their mechanical properties.

A first class of materials suitable for making the self-repairing layer according to the present invention consists of amorphous polymers having properties of high-viscosity liquids or of semi-solids, these polymers being selected, for example, from the following classes of products:
(a) polyisobutene or isobutene copolymers with minor amounts of different C₄-C₁₂ α-olefins;
(b) atactic propylene homopolymers;
(c) silicone rubbers, consisting of linear chains of monomer units of formula -O-SiR₁R₂-, in which R₁ and R₂ are optionally substituted aliphatic or aromatic radicals such as, for example: dimethylsilicone, methylphenylsilicone, methylvinylsilicone, silicones containing cyanoacrylic or fluoroalkyl groups, and the like.

Among the products mentioned above, it is particularly preferred to use polyisobutene having a viscosimetric (Staudinger) average molecular weight of between 2,000 and 50,000, preferably between 5,000 and 20,000, known commercially under the trademarks Vistanex® (Esso Chemical), Hycar® (Goodrich), Oppanol® (BASF) , and the like.

The amorphous polymers mentioned above can be used as such or dissolved in a suitable solvent, for example a mineral oil or a synthetic oil, in particular a paraffin oil or a naphthenic oil such as, for example, the oils known by the abbreviations ASTM 103, 104A and 104B. Preferably, low molecular weight products that are homologues of the amorphous polymer can be used as solvents.

For example, in the case of polyisobutene, a polybutene oil with an osmometric average molecular weight of between 400 and 1,300, preferably between 500 and 1,000, which can be obtained by polymerization of C₄ olefin mixtures containing mainly isobutene, can advantageously be used as solvent. Products corresponding to these characteristics can be found on the market under the trademarks Napvis® (BP Chemicals) and Indopol® (Amoco).

In the case of silicone rubbers, it is possible to use a silicone oil with a viscosity generally between 100 and 5,000 mm²/sec at 25°C as solvent.

In general, the amount of solvent is between 5 and 95% by weight, preferably between 50 and 90% by weight, relative to the total weight of the mixture.

In the case where the amorphous polymer is dissolved in a suitable solvent as mentioned above, a thickener can advantageously be added to the composition, the main function of this thickener being to control flowability, thereby reducing the risk of the self-repairing material uncontrollably leaking from the cable.

Inorganic products such as pyrogenic silica, bentonite and the like, or mixtures thereof, can for example be used as thickeners. The amount of thickener is generally between 1 and 20 parts by weight, preferably between 2 and 10 parts by weight, relative to the total weight of the mixture.

The self-repairing material as described above can be prepared according to standard techniques, for example by dissolving the amorphous polymer and any additives in the oily solvent by heating. If a thickener is used, it can be dispersed by vigorous stirring under heating.

Another category of materials which are suitable for forming the self-repairing inner layer according to the present invention consists of solid polymeric materials dispersed in an oily phase.

The oily phase can consist, for example, of:
(a) paraffinic oils or naphthenic oils, for example the oils ASTM 103, 104A or 104B;
(b) polybutene oils with an osmometric average molecular weight of between 400 and 1,300, preferably between 500 and 1,000, which can be obtained by polymerization of C₄ olefin mixtures containing mainly isobutene, for example the commercial products Napvis® (BP Chemicals) and Indopol® (Amoco);
(c) polypropylene oils;
(d) low molecular weight polyesters, for example acrylic acid polyesters, such as the product ECA 7955 from Exxon Chemical Co.; or mixtures thereof.

The solid polymeric material is generally a high molecular weight polymer with elastomeric properties, selected, for example, from:
(i) styrene block copolymers or terpolymers with different olefins and/or with dienes, for example with butene, ethylene, propylene, isoprene, butadiene and the like, and in particular: styrene-butadiene-styrene (S-B-S), styrene-isoprene-styrene (S-I-S) and styrene-ethylene/butene-styrene (S-EB-S) triblock polymers; styrene-ethylene/propylene (S-EP) and styrene-ethylene/butene (S-EB) diblock polymers; styrenebutadiene or styrene-isoprene branched polymers; such products are commercially available, for example, under the trademark Kraton® (Shell Chemical);
(ii) polyisobutene or isobutene copolymers with minor amounts of different C₄-C₁₂ α-olefins, having a viscosimetric (Staudinger) average molecular weight generally of greater than 40,000, preferably between 50,000 and 200,000;
(iii) copolymers of propylene with ethylene and/or with C₄-C₁₂ α-olefins (for example 1-butene, isobutene, 1-hexene, and the like), or with C₄-C₂₀ dienes (for example 1,3-butadiene, 1,4-hexadiene, 5-ethylidene-2-norbornene, and the like), known commercially, for example, under the trademarks Dutral® (Enichem) or Nordel® (Dow-Du Pont);
(iv) polyisoprene or natural rubber;
(v) nitrile rubbers;
(vi) butyl rubbers;
(vii) amorphous ethylene copolymers, for example copolymers of ethylene with esters having ethylenic unsaturation, such as ethylene/vinyl acetate (EVA), ethylene/methyl acrylate (EMA), ethylene/ethyl acrylate (EEA), ethylene/butyl acrylate (EBA) copolymers, and the like;
or mixtures thereof.

The solid polymeric material can be dispersed in the oily base in a subdivided form, for example in the form of granules or powder, in amounts generally of between 5 and 70% by weight, preferably between 10 and 60% by weight, relative to the total weight of the mixture. A homogeneous dispersion can be obtained by suitable mixing according to the standard techniques, for example using an internal mixer of the type with tangential rotors (Banbury) or interlocking rotors, or alternatively in continuous mixers of the Ko-Kneader type (Buss) or co-rotating or counter-rotating twinscrew mixers.

To avoid an unacceptable reduction in the mobility of the self-repairing material at low temperatures, the optionally present oily products generally have a pour point, determined according to ASTM D97-57, of less than 0°C, preferably less than -10°C and even more preferably less than -20°C.

Inorganic fillers of various types can be added to the self-repairing materials described above, these fillers having the function of improving processability and of controlling flowability, for example: kaolin, calcium carbonate, aluminium hydroxide, magnesium hydroxide, talc, precipitated silica, and the like, or mixtures thereof. The amount of inorganic fillers can vary within a wide range, generally between 5 and 50 parts by weight, preferably between 10 and 30 parts by weight, relative to the total weight of the mixture. The self-repairing material can also contain additives of various types, such as: stabilizers, antioxidants, anti-copper products, glass microspheres, and the like.

To give the anti-repair material greater cohesiveness, tackifying agents can optionally be added such as: natural or synthetic rosins (for example the products Polypale® from Hercules, or Escorez® from Esso Chemicals), or derivatives thereof; esterified polyalcohols (for example the products Oulupale® from Veitsiluotooy), or mixtures thereof. The amount of tackifying agent is generally between 1 and 20% by weight, preferably between 5 and 10% by weight, relative to the total weight of the mixture.

The thickness of the self-repairing material layer according to the present invention must be sufficient to ensure self-repairing of the cable, therefore this thickness is selected mainly as a function of the dimensions of the cable and of the type of damage which the latter might sustain. In general, thicknesses of not less than 0.1 mm, preferably between 0.2 and 2 mm and more preferably between 0.3 and 1 mm, are sufficient.

For the purpose of giving the electrical cable according to the present invention impact-strength properties, an expanded polymer coating can be added, as described in European patent application No. 97107969.4 filed on 15.05.97 in the name of the Applicant. This coating is preferably placed in direct contact with the outer protective sheath. Although the expanded polymer coating per se does not have any particular resistance to cutting, it has the capacity of absorbing, at least partly, the energy transmitted by impact with a cutting tool and thus of reducing the risk of damage to the layers of cable coating.

The expanded polymer coating can consist of any type of expandible polymer such as, for example: polyolefins, olefinic copolymers, olefin/unsaturated ester copolymers, polyesters, polycarbonates, polysulphones, phenolic resins, ureic resins, and mixtures thereof. Preferably, olefinic polymers or copolymers, in particular based on polyethylene (PE) and/or polypropylene (PP), mixed with ethylene-propylene rubbers can be used. PP modified with ethylene-propylene rubbers (EPR), with a PP/EPR weight ratio of between 90/10 and 50/50, preferably between 85/15 and 60/40, can advantageously be used. It is also possible to mix prior to expansion the polymeric material with a predetermined amount of rubber in powder form, for example vulcanized natural rubber. In particular, the Applicant has found that a polymer material which has, prior to expansion, a flexural modulus at room temperature of greater than 200 MPa, preferably of at least 400 MPa (measured according to ASTM D790), but not greater than 2,000 MPa, so as not to excessively increase the rigidity of the finished product, is particularly suitable for this purpose. The degree of expansion of the polymer is extremely variable depending on the specific polymer used and on the thickness of the coating which it is intended to obtain. In general, the degree of expansion can range between 20% and 3,000%, preferably between 30% and 500%. The minimum thickness of the expanded layer which is capable of ensuring the desired impact strength depends mainly on the degree of expansion and on the flexural modulus of the polymer. In particular, for medium voltage cables an expanded-coating thickness of at least 0.5 mm, preferably of between 1 and 6 mm is sufficient. Further details regarding the characteristics of this expanded polymer layer are given in the above-mentioned European patent application No. 97107969.4, whose text constitutes an integral part of the present description.

For the purpose of promoting dispersion of the leakage microcurrents which may be present directly after the cable has been damaged and before it has been fully self-repaired, this conductor can advantageously be coated with a layer of polymeric material having semiconductive properties. By favouring dispersion of the leakage microcurrents, this material reduces the risk of triggering of corrosion points onto the conductor. The semiconductive layer, which is applied to the conductor by, for example, taping or, preferably, extrusion, generally has a thickness of at least 0.05 mm, preferably between 0.1 and 0.5 mm.

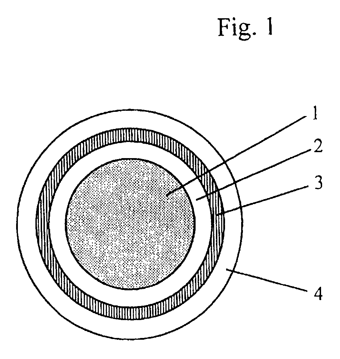

Figure 1 shows schematically the cross-section of an electrical cable according to the present invention, of unipolar type, comprising, from the inside outwards, a conductor (1), an insulating layer (2), a self-repairing layer (3) as described above, and an outer protective sheath (4).

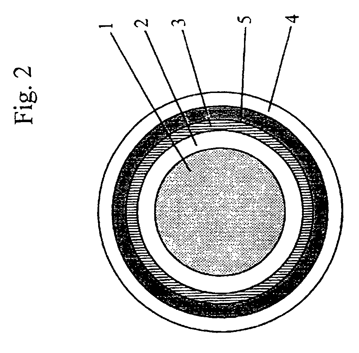

Figure 2 shows a further embodiment of a unipolar electrical cable according to the present invention, comprising, in addition to the elements reported above, an expanded polymer layer (5) as described above, placed between the self-repairing layer (3) and the outer protective sheath (4), this layer giving the cable high impact strength.
Figure 3 shows schematically the cross-section of the device used to measure the cohesive force of the self-repairing material, a detailed description of which is given in the examples.

The conductor (1) generally consists of metal wires, preferably made of copper or aluminium, plaited together according to standard techniques.

The insulating layer (2) and the outer protective sheath (4) consist of a crosslinked or non-crosslinked polymer composition having as base component a polymer selected, for example, from: polyolefins (homopolymers or copolymers of various olefins), olefin/ethylenically unsaturated ester copolymers, polyesters, polyethers, polyether/polyester copolymers, and mixtures thereof. Examples of such polymers are: polyethylene (PE), in particular linear low density PE (LLDPE); polypropylene (PP); propylene/ethylene thermoplastic copolymers; ethylene-propylene rubbers (EPR) or ethylene-propylene-diene rubbers (EPDM); natural rubbers; butyl rubbers; ethylene/vinyl acetate (EVA) copolymers; ethylene/methyl acrylate (EMA) copolymers; ethylene/ethyl acrylate (EEA) copolymers; ethylene/butyl acrylate (EBA) copolymers; ethylene/α-olefin thermoplastic copolymers, and the like.

The abovementioned polymers can be crosslinked according to known techniques, in particular by heating in the presence of a radical initiator, for example an organic peroxide such as dicumyl peroxide. Alternatively, crosslinking can be carried out using silanes, which involves the use of a polymer such as those mentioned above, in particular a polyolefin, to which silane units comprising at least one hydrolysable group, for example trialkoxysilane groups, in particular trimethoxysilane, have been covalently attached. The silane units can be introduced by radical reaction with silane compounds, for example methyltriethoxysilane, dimethyldiethoxysilane, vinyl-dimethoxysilane and the like. The crosslinking is carried out in the presence of water and a crosslinking catalyst, for example an organic titanate or a metal carboxylate. Dibutyltin dilaurate (DBTL) is particularly preferred.

The self-repairing layer can be produced by means of a process of pultrusion of the self-repairing material on the cable core, the latter consisting of the conductor alone or, preferably, of the conductor which has been pre-coated with at least one insulating layer according to known techniques. This pultrusion process involves depositing on the cable core a layer of self-repairing material which is maintained at a sufficient degree of fluidity, for example by heating, and then forming this layer so as to obtain the desired final thickness. Further coating layers (for example the outer protective sheath) can then be applied to the cable core thus coated, according to known techniques.

Therefore, in a further aspect, the present invention relates to a process for manufacturing a cable having a layer of self-repairing material, this process comprising the following steps:
(i) depositing the self-repairing material, maintained in a fluid state, on a cable core;
(ii) forming the said layer of self-repairing material so as to obtain a uniform layer of a predetermined thickness.

The pultrusion process can be carried out batchwise or, preferably, continuously.

Both steps of the pultrusion process can be carried out, for example, using an application head consisting, for example, of a hollow cylindrical element having an inlet hole whose diameter is slightly larger than that of the cable core, and an outlet hole having a predetermined diameter which depends on the desired thickness of the self-repairing layer. Once the initial section of the cable core has been introduced through the abovementioned holes, the head is fed with the self-repairing material which has been preheated so as to maintain the self-repairing material at a temperature such as to obtain a sufficient degree of fluidity. This temperature is generally between 50° and 200°C, and is selected essentially as a function of the nature of the self-repairing material. By running the cable core inside the application head, the first stage of deposition of the self-repairing material is carried out. The passing rate of the cable core through the application head, and thus the time of immersion in the self-repairing material, can vary within a wide range, generally between 1 and 1,000 m/min, and is selected mainly as a function of the type of self-repairing material used.

The subsequent forming step is carried out by the outlet hole of the application head, which has a diameter corresponding to the predetermined diameter value which it is desired to obtain for the warm cable core coated with the self-repairing material.

Alternatively, the cable bearing the self-repairing layer according to the present invention can be made using an extrusion head of conventional type. The self-repairing material is fed into the extrusion head under heating so as to obtain a sufficient fluidity, and is distributed inside the head by means of a suitable conveyor so as to obtain an outer corona on exit from the extrusion head, in which the material is uniformly distributed. The extrusion head can be of the single-layer type or of the multilayer type, so as to effect co-extrusion of the self-repairing layer and of one or more of the adjacent layers.

To describe the invention further, some working examples are given hereinbelow.

### EXAMPLES 1-5.

Various types of self-repairing materials according to the present invention were prepared, whose compositions are reported in Table 1 (as parts by weight).

As to Example 1, the commercial product was used as such, and the antioxidant was added thereto by dissolution under heating.

The materials of Examples 2-4 were prepared by dissolving under heating (120-150°C) solid polymeric components and antioxidant in the oily phase. In the case of Example 2, pyrogenic silica was dispersed in the thus obtained solution under heating and with vigorous stirring.

As regards Example 5, the composition was prepared as follows. The solid polymeric components were processed in an open mixer with moderate heating until a continuous and homogeneous sheet was obtained. The polybutene oil and the antioxidant were then added, the stirring being continued until the mixture was fully homogeneous.

The following measurements were carried out on the self-repairing materials thus prepared.

### (a) Cohesive force.

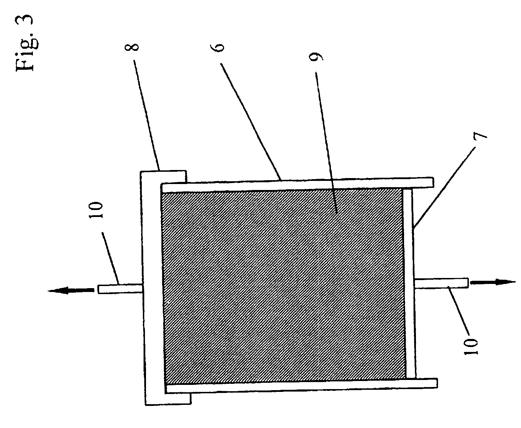

The cohesive force was determined by means of a device which is shown schematically (in cross-section) in Fig. 3. With reference to Fig. 3, a cylindrical aluminium container (6) (height 45 mm, inside diameter 44 mm, which corresponds to a cross-section of 15.2 cm²), having a movable base (7), also made of aluminium, and a lid (8), was filled with the test material (9), preheated to about 150°C so as to obtain sufficient fluidization and thus homogeneous distribution of the material inside the container, thereby avoiding the formation of air bubbles. Both the movable base (7) and the lid (8) have a locking rod (10) which allows a dynamometer (not shown in Fig. 3) to be attached thereto. The use of aluminium ensures a high level of adhesion to the test material, thereby avoiding any detachment of the material from the movable base and/or from the walls of the cylinder during the test.

After cooling of the material to room temperature, the cylinder is closed by the lid (8) (for example by screwing down by means of a suitable thread, not shown in Fig. 3) and is inserted into an Instron dynamometer, by means of which an increasing tensile force is applied to the movable base (7) (pulling rate: 2 mm/min) until the self-repairing material inside the mass "breaks" with detachment of some of the material, which adheres to the movable base, from the mass adhering to the walls of the cylinder. The cohesive force is given by the load "at break" (expressed in kg) per unit of surface area (in cm²). For each material, the measurement was carried out on three samples. In Table 1 the arithmetic mean value is reported.

The re-cohesive capacity of the various test materials was evaluated in the following way. A layer of self-repairing material of about 1 cm in thickness was deposited on the surface of two metal disks (made of aluminium) having a 40 mm diameter. The deposition was carried out under heating and with the aid of a spatula with rounded edges, so as to obtain a layer which was as smooth and homogeneous as possible and free of air bubbles. On the opposite face, each disk was fitted with a locking rod to allow a dynamometer to be attached thereto. Once the material had cooled to room temperature, the two disks were placed one on top of the other with the two faces coated with the self-repairing material coming together, thus producing an overall thickness of material of about 2 cm. No compressive force was applied to the two disks, therefore the only force acting on the contact surface between the two layers of self-repairing material was the weight-force (equal to about 50 grams) exerted by the assembly of the upper disk and of the related layer of self-repairing material. After about 3 hours, the force required to separate the material into two distinct parts (without detaching the disks from this material) was measured using an Instron dynamometer. It was found that this force was substantially identical to the cohesive force measured using the cylinder with a movable base, as described above. In addition, once re-cohesion took place, it was no longer possible to identify the joining surface between the two layers.

### (b) Displacement on an inclined plane.

A smooth aluminium plate (dimensions 400 × 80 × 2 mm) was cleaned thoroughly with alcohol and left to dry. 3 g of self-repairing material were placed on the upper part of the plate using a spatula with rounded edges. The material was shaped by means of the spatula so as to obtain a small uniform mass of rounded shape, while avoiding the formation of air bubbles. The material was then left to stand in a horizontal position for about two hours. The initial position was marked on the edge of the plate. The plate was then fixed to a support so as to form an angle of 60° relative to the horizontal plane, and placed in an oven thermostatically adjusted to 60°C. After 24 hours, the plate was removed from the oven and left to cool for one hour at room temperature. The displacement, relative to the initial position, of the front of the material along the inclined plane was measured using a gauge. The results are given in Table 1. No appreciable demixing of the components was observed for any of the test samples.

### (c) Ageing of crosslinked polyethylene specimens.

To evaluate inertness of self-repairing materials, prepared as above, with respect to the polyolefins which normally constitute the coating layers adjacent to the self-repairing layer, ageing tests were carried out on samples of silane-crosslinked polyethylene (Getilan® ATP 3) kept at 80°C for 7 and 14 days in the materials of Examples 1 and 2. In particular, the weight variation relative to the initial weight and the mechanical properties before and after ageing were determined. The results are given in Table 2. As can be seen, the tests carried out show the substantial inertness of the self-repairing materials relative to crosslinked polyethylene, as demonstrated by the extremely narrow variations in weight and in mechanical properties of the test samples.

**TABLE 1**

| Example | 1 | 2 | 3 | 4 | 5 |
|---|---|---|---|---|---|
| Vistanex® LMMH | 100 | 30 | -- | -- | -- |
| Vistanex® MML80 | -- | -- | -- | -- | 15 |
| Napvis® DE10 | -- | 70 | 88 | 86 | 100 |
| Silica CAB-O-SIL H5 | -- | 5 | -- | -- | -- |
| Kraton® G 1702 | -- | -- | 12 | 14 | -- |
| Dutral® CO 043 | -- | -- | -- | -- | 85 |
| Irganox® 1010 | 0.5 | 0.5 | 0.5 | 0.5 | 0.5 |
| Cohesive force (kg/cm²) | 0.38 | 0.70 | 0.13 | 0.38 | 1.00 |
| Displacement on inclined plate (mm) | 350 | 1 | 10 | 1 | 75 |
| Vistanex® LMMH (Esso Chem. Co.): polyisobutene with a viscosimetric (Staudinger) average molecular weight equal to 10,000-11,700; Vistanex® MML80 (Esso Chem. Co.): polyisobutene with a viscosimetric (Staudinger) average molecular weight equal to 64,000-81,000; Napvis® DE10 (BP Chemicals): polybutene oil with an osmometric average molecular weight equal to 950; pour point -7°C (ASTM D97-57); Silica CAP-O-SIL H5 (Cabot): pyrogenic silica with a surface area of 325 m²/g and an average particle diameter of 0.007 µm; Kraton® G 1702 (Shell Chemical Co.): styrene-ethylene/propylene diblock copolymer of average molecular weight 170,000; Dutral® CO 043 (Enichem Elastomers): ethylene/propylene elastomeric copolymer; Irganox® 1010 (Ciba-Geigy): antioxidant (pentaerythrityl-tetra[3-(3,5-di-tert-butyl-4-hydroxyphenyl)propionate]). | | | | | |

**TABLE 2**

| Material | Example 1 | | | Example 2 | | |
|---|---|---|---|---|---|---|
| Ageing time at 80°C (days) | 0 | 7 | 14 | 0 | 7 | 14 |
| Δ Weight (%) | -- | -0.54 | -0.56 | -- | +1.48 | +1.77 |
| Stress at break (MPa) | 21.7 | 21.3 (-1.9%) | 20.6 (-5.1%) | 21.7 | 19.7 (-9.3%) | 20.5 (-5.6%) |
| Elongation at break (%) | 370 | 327 (-11.7%) | 320 (-13.6%) | 370 | 365 (-1.4%) | 335 (-9.5%) |
| Modulus (MPa) | 499 | 419 (-16%) | 403 (-19.3%) | 499 | 460 (-7.9%) | 449 (-10%) |

### EXAMPLE 6

### (a) Manufacturing of the self-protected cable

A layer of polypropylene insulating material (commercial product Moplen® BT 20 from Montell) with a nominal thickness of 1 mm was deposited on a flexible aluminium conductor of cross-section equal to 70 mm². For this operation, a Bandera 80 mm extruder in configuration 25 D, with a screw of pour-off thread type and an extrusion head with electrical heating was used, using the following compression-type assembly of moulds: tip die with a diameter of 10.5 mm, ring die with a diameter of 12.0 mm. The following temperature profile was used during the extrusion (°C):

| drawhole | screw | zone 1 | zone 2 | zone 3 | zone 4 | zone 5 | zone 6 | collar | head |
|---|---|---|---|---|---|---|---|---|---|
| 20 | neutral | 180 | 190 | 195 | 200 | 210 | 235 | 240 | 250 |

The following process conditions were employed:
Line speed: 2.8 m/min
Pressure at the extruder end: 60 bar
Extruder spin speed: 1.74 rpm
Extruder absorption: 30 Amps
Nominal diameter of the cold cable: 12.1 mm.

The cable core was subsequently subjected to a further processing phase, during which the self-repairing material and the outer sheath were applied using a tandem-type technique.

An application head coupled to a component for melting and pumping the self-repairing material was placed upstream of the point of application of the outer sheath.

A Nordson BM 56 device with a pressure plate and a supply gear pump was used as component for melting the self-repairing material. This device was coupled to the application head by means of a supply tube heated by electrical resistance and having a length of about 3 m.

The application head consisted of a hollow cylindrical component having an inlet hole for the cable core with a diameter slightly larger than that of the core itself, and an outlet hole of diameter equal to 13 mm.

A layer of self-repairing material with a nominal thickness of 0.5 mm, prepared as described above and corresponding to the composition of Example 1 (see Table 1), was applied using this application head.

The pultrusion was carried out using the following temperature settings:
Pressure plate: 120°C
Supply tube: 120°C
Application head: 90°C.

The outer sheath was applied downstream of the pultrusion zone, by means of the same Bandera 80 mm - 25 D extruder described above, using Moplen® BT 20 (Montell) polypropylene as material, with a nominal thickness of 1 mm. Using the same set-up and the same temperature profile as indicated above for the insulation layer, the following mould mounting (in compression) was used: tip die with a diameter of 13.5 mm, ring die with a diameter of 18.2 mm.

The process conditions were set as follows:
Line speed: 2 m/min
Pressure at the end of the extruder: 20 bar
Extruder spin speed: 1.75 rpm
Extruder absorption: 19 Amps
Nominal diameter of the cold cable: 15.1 mm.

About 200 m of cable with a self-repairing layer were produced by means of the process described above.

### (b) Damage tests.

The cable thus obtained was subjected to tests to effect various types of damage to the coating layers in a controlled and reproducible manner.

To perform cutting, a device consisting of a C-shaped frame supporting a guide inside which slides a cylindrical shaft was used. One end of the shaft is threaded so as to allow various types of cutting tools to be mounted. The following types of damage was effected using this device:
(1) Blunt-type damage (based on standard ICEA S-81-570-1996, § 6.2.3): the cable was subjected to impact with a steel anvil with a cutting angle of 92° and a rounded edge with a curvature radius of 0.6 mm;
(2) Blade-type damage followed by bending: the cable was subjected to impact with a steel blade having a thickness of 0.2 mm, and then to bending so as to cause a complete opening of the cut, using a mandrel with a diameter of 375 mm, equivalent to 25 times the diameter of the cable;
(3) Shovel-type damage (according to standard DIN 20127): the cable was subjected to a static load by means of a tool with a cutting angle of 21.8° and a flat profile at the point of contact, 0.5 mm in width.

The impact energy or, in the case of static load (test (3)), the load required to completely cut through all of the coating layers until the conductor was reached without damaging it, was determined for each of the above-mentioned tests. This measurement was carried out with the aid of an oscilloscope coupled to the cable, through which a certain amount of current was passed. At the moment the cutting tool reached the conductor, the oscilloscope recorded the instantaneous change in the electrical signal caused by the short-circuit resulting from the contact between the tool and the conductor.

For the blunt-type damage (1), the impact energy required to reach the conductor was 9.2 J, obtained using a mass of 53.7 kg and a drop height (including the diameter of the cable) of 32.5 mm.

For the blade-type damage (2), the impact energy required to reach the conductor was 1 J, obtained using a mass of 26 kg and a drop height (including the diameter of the cable) of 19 mm.

For the shovel-type damage (3), the load required to reach the conductor was 100 kg.

To qualitatively evaluate the existence of a effect of radial compression on the layer of self-repairing material by the outer sheath, the cable was subjected to the following test. Holes were made in a small length of cable using a pillar drill with perforation bits of 3 and 5 mm in diameter. The holes were made on two directrices at 180° relative to each other. The depth of the holes was such as to cut completely through the thickness of the sheath until the self-repairing material was reached. The cable damaged in this way was left in a horizontal position so as to have one series of holes oriented upwards and the other series oriented downwards. After 24 hours, it was observed that the self-repairing material had completely filled all of the holes, leaking out in a negligible quantity. Since the test was carried out without applying any external force, except for the force of gravity, the leakage of material through the holes facing upwards is a clear indication of the existence of a radial pressure exerted by the outer sheath, which assists the movement of the material towards the points of rupture.

On the basis of a mathematical model of a cable in which it is taken account, for the various materials constituting the cable, of linear thermal dilation coefficient, volume dilation coefficient, longitudinal tension which maintains congruence between adjacent layers, elastic modulus and temperature change which the cable undergoes during the extrusion process, the Applicant has calculated, for the cable according to the present example, a radial compression value exerted by the outer sheath on the self-repairing layer equal to about 3.8 bar. Of course, this value should be considered only as an approximate evaluation of the ringing effect of the outer sheath on the self-repairing layer, bearing in mind that this effect is influenced not only by the characteristics of the materials used, but also by the specific conditions under which extrusion and subsequent cooling of the sheath are carried out.

### (c) Electrical tests.

To check effectiveness of self-repairing, leakage currents were measured on small cable lengths damaged according to the various ways described above under the following conditions.

Immediately after damage, the cable lengths were connected to an electrical circuit and immersed in a tank containing tap water at room temperature. Throughout the period of the test, which lasted 60 days in total, an a.c. voltage of 150 V at 50 Hz was applied to the cable lengths, causing a current to flow such as to bring the temperature of the conductor to about 50°C in the part immersed in water, corresponding to about 100°C in the part in air, with continuous cycles of 12 hours of heating and 12 hours of spontaneous cooling.

The total leakage current (I_{L}) was measured by means of a Keithley Mod. 197 type digital multimeter. The current I_{L} measured is the result of the vectoral sum of the typical capacitive current of the undamaged cable I_{C} = ω·C·V (where ω is the pulsation, C is the capacitance and V is the applied voltage), and of the breakdown current (I_{B}) caused by any occurring damage. In a damaged but not self-protected cable, the breakdown current is largely prevailing over the capacitive current, therefore the measured leakage current is substantially equal to the breakdown current.

In Table 3 the results of measurements are reported, as average value on 5 samples of the same type. For comparative purposes there are reported the values of leakage currents measured on an intact, i.e. undamaged, cable having the self-repairing layer and on an identical cable without the self-repairing layer and which was subjected to a blade-type damage.

**TABLE 3**

| | I_{L} (µA/m) | | | | |
|---|---|---|---|---|---|
| Test time (days) | Cable with self-repairing layer | | | | Cable without self-repairing layer blade cut |
| | as such | shovel cut | blade cut | blunt cut | |
| 0 | 12.8 | 13.0 | 12.5 | 13.1 | 20,000 |
| 3 | 12.9 | 13.4 | 12.9 | 12.7 | 20,000 |
| 9 | 12.6 | 12.7 | 13.1 | 13.1 | 8,000 |
| 30 | 13.8 | 14.5 | 14.6 | 14.7 | > 100,000 |
| 60 | 14.0 | 13.9 | 14.5 | 14.2 | -- |

As may be noted from the results given Table 3, the cable with a self-repairing layer according to the present invention and damaged according to the various methods described above shows very low leakage currents even after 60 days of immersion in water, which are substantially identical to those of the intact cable. Therefore, the breakdown current is essentially null, the leakage current measured being attributable almost exclusively to the intrinsic capacitive current of the cable.

In contrast, the cable without a self-repairing layer and with a blade-type damage immediately showed high leakage currents due to the damage, which, after 30 days of standing in water, led to total corrosion of the conductor, with complete interruption of the circuit. The slight decrease in the leakage current after 9 days is attributable to the formation of a layer of aluminium hydroxide as a result of the conductor corrosion, which allowed a certain degree of electrical insulation to be obtained. As corrosion progressed, large amounts of aluminium hydroxide formed which, increasing in volume upon contact with water, led to complete rupture and opening of the coating layers.

### EXAMPLE 7

### (a) Manufacturing of the self-protected cable.

Following basically the same method as that described for Example 6, a cable core consisting of a compressed aluminium conductor (cross-section: 54 mm²), insulated with a layer of silane-crosslinked linear low density polyethylene (LLDPE) (product DFDA 7530 from Union Carbide) having a nominal thickness of 1 mm was prepared.

Then, the layer of self-repairing material and the outer sheath were applied on the cable core using the tandem-type technique as described in Example 6. The self-repairing material (nominal thickness: 0.5 mm) had the composition of Example 5 given in Table 1, whereas the outer sheath consisted of silane-crosslinked high density polyethylene (HDPE) (product LS 6402-00 from Quantum) (nominal thickness: 1 mm).

The layer of self-repairing material was applied by means of the pultrusion process as described in Example 6, under the following temperature settings:
Pressure plate: 200°C
Supply tube: 200°C
Application head: 200°C

The outer sheath was applied downstream of the pultrusion zone, according to the method described in Example 6. The process conditions were set as follows:
Line speed: 1.3 m/min
Extruder spin speed: 3.82 rpm
Extruder absorption: 61.5 Amps
Nominal diameter of the cold cable: 14.5 mm.

About 100 m of cable with a self-repairing layer were produced by the process described above.

Lengths of cable were subjected to the same damage tests as those described in Example 6. The effectiveness of self-repairing was assessed by measuring the leakage current following the same procedure as that described in Example 6. Table 4 gives the results obtained (as average value on 5 samples of the same type).

**TABLE 4**

| | I_{L} (µA/m) | | | | |
|---|---|---|---|---|---|
| Test time (days) | Cable with self-repairing layer | | | | Cable without self-repairing layer |
| | as such | shovel cut | blade cut | blunt cut | blade cut |
| 30 | 18.7 | 19.5 | 20.2 | 19.5 | > 100,000 |
| 60 | 19.5 | 19.8 | 20.8 | 20.1 | -- |

Similarly to the results of Example 6, the cable with the self-repairing layer according to the present invention and damaged according to the various methods described above showed very low leakage currents even after 60 days of immersion in water, which are substantially identical to those of the intact cable. In contrast, the cable without the self-repairing layer and with blade-type damage showed high leakage currents due to the damage, which, after 30 days of standing in water, led to total corrosion of the conductor, with complete interruption of the circuit.

## Claims

1. Cable comprising a conductor and at least one coating layer, **characterized in that** the said cable comprises an inner layer comprising a self-repairing material, said self-repairing material being a dielectric material and having a cohesive force at room temperature of at least 0.05 kg/cm² and a controlled flowability which is such that a sample of about 3 grams of self-repairing material, placed on an aluminium plate inclined at 60° relative to the horizontal plane and maintained at 60°C for 24 hours, shows a displacement of the material front along the inclined plate of between 0.5 and 400 mm.

2. Cable according to Claim 1, in which the self-repairing material has a dielectric rigidity under alternating current of greater than 15 kV/mm and a resistivity of greater than 10¹⁴ Ω·cm.

3. Cable according to Claim 2, in which the self-repairing material has a dielectric rigidity under alternating current of greater than 20 kV/mm and a resistivity of greater than 10¹⁶ Ω·cm.

4. Cable according to any one of the preceding claims, in which the self-repairing material has a cohesive force at room temperature of between 0.1 and 4 kg/cm².

5. Cable according to Claim 4, in which the self-repairing material has a cohesive force at room temperature of between 0.2 and 2 kg/cm².

6. Cable according to any one of the preceding claims, in which the displacement of the front of the self-repairing material sample along the inclined plate is between 1 and 200 mm.

7. Cable according to Claim 6, in which the displacement of the front of the self-repairing material sample along the inclined plate is between 50 and 100 mm.

8. Cable according to Claim 1, comprising an insulating coating layer and an outer sheath and **characterized in that** the inner layer is placed between the insulating layer and the outer sheath.

9. Cable according to Claim 1, comprising an insulating coating layer and **characterized in that** the inner layer is placed between the conductor and the insulating layer.

10. Cable according to Claim 1, comprising at least two insulating coating layers and **characterized in that** the inner layer is placed between two of the said insulating layers.

11. Cable according to any one of the preceding claims, in which the conductor is coated with a semiconductive layer.

12. Cable according to any one of the preceding claims, also comprising an expanded polymer coating.

13. Cable according to Claim 12, in which the expanded polymer coating is placed in direct contact with an outer protective sheath.

14. Cable according to any one of the preceding claims, in which the inner layer has a thickness of not less than 0.1 mm.

15. Cable according to Claim 14, in which the inner layer has a thickness of between 0.2 and 2 mm.

16. Cable according to Claim 15, in which the inner layer has a thickness of between 0.3 and 1 mm.

17. Cable according to any one of the preceding claims, in which the self-repairing material has a cohesiveness which is such that the force of recohesion measured at room temperature has a value of not less than 80% relative to the value of the cohesive force measured on the material as such.

18. Cable according to Claim 17, in which the force of recohesion measured at room temperature has a value of not less than 90% relative to the value of the cohesive force measured on the material as such.

19. Cable according to any one of the preceding claims, in which the self-repairing material has a saturation water content of less than 400 ppm.

20. Cable according to Claim 19, in which the self-repairing material has a saturation water content of less than 200 ppm.

21. Cable according to any one of the preceding claims, in which the self-repairing material has a permeability to water vapour, measured at room temperature according to ASTM E96, of between 1.2 × 10⁻⁷ and 8.0 × 10⁻⁶ g/(cm·hour·mmHg).

22. Cable according to any one of the preceding claims, in which the self-repairing material comprises an amorphous polymer having properties of a high-viscosity liquid or of a semi-solid.

23. Cable according to Claim 22, in which the amorphous polymer is selected from:
(a) polyisobutene or isobutene copolymers with minor amounts of different C₄-C₁₂ α-olefins;
(b) atactic propylene homopolymers;
(c) silicone rubbers, consisting of linear chains of monomer units of formula -O-SiR₁R₂-, in which R₁ and R₂ are optionally substituted aliphatic or aromatic radicals.

24. Cable according to Claim 23, in which the amorphous polymer is polyisobutene having a viscosimetric (Staudinger) average molecular weight of between 2,000 and 50,000.

25. Cable according to Claim 24, in which the amorphous polymer is polyisobutene having a viscosimetric (Staudinger) average molecular weight of between 5,000 and 20,000.

26. Cable according to any one of Claims 22 to 25, in which the amorphous polymer is dissolved in a solvent.

27. Cable according to Claim 26, in which the solvent is a mineral oil or a synthetic oil.

28. Cable according to Claim 27, in which the solvent is a paraffinic oil or naphthenic oil.

29. Cable according to Claim 26, in which the amorphous polymer is dissolved in a solvent which is a low molecular weight homologue of the amorphous polymer.

30. Cable according to Claim 29, in which the amorphous polymer is a polyisobutene according to Claim 23 or 24, dissolved in a polybutenic oil having an osmometric average molecular weight of between 400 and 1,300.

31. Cable according to Claim 30, in which the amorphous polymer is a silicone rubber, dissolved in a silicone oil having a viscosity of between 100 and 5,000 mm²/sec at 25°C.

32. Cable according to any one of Claims 26 to 30, in which the amount of solvent is between 5 and 95% by weight, relative to the total weight of the mixture.

33. Cable according to Claim 32, in which the amount of solvent is between 50 and 90% by weight, relative to the total weight of the mixture.

34. Cable according to any one of Claims 26 to 33, in which the self-repairing material also comprises a thickener.

35. Cable according to Claim 34, in which the thickener is selected from: pyrogenic silica, bentonite or mixtures thereof.

36. Cable according to Claim 34 or 35, in which the thickener is added in amounts of between 1 to 20 parts by weight relative to the total weight of the mixture.

37. Cable according to any one of Claims 1 to 21, in which the self-repairing material comprises a solid polymeric material dispersed in an oily phase.

38. Cable according to Claim 37, in which the oily phase is selected from:
(a) paraffinic or naphthenic oils;
(b) polybutene oils having an osmometric average molecular weight of between 400 and 1,300;
(c) polypropylene oils
(d) low molecular weight polyesters; or mixtures thereof.

39. Cable according to Claims 37 or 38, in which the solid polymeric material is a high molecular weight polymer with elastomeric properties selected from:
(i) styrene block copolymers or terpolymers with different olefins and/or with dienes;
(ii) polyisobutene or copolymers of isobutene with minor amounts of different C₄-C₁₂ α-olefins;
(iii) propylene copolymers with ethylene and/or with C₄-C₁₂ α-olefins or with C₄-C₂₀ dienes;
(iv) polyisoprene or natural rubber;
(v) nitrile rubbers;
(vi) butyl rubbers;
(vii) amorphous ethylene copolymers;
or mixtures thereof.

40. Cable according to any one of Claims 37 to 39, in which the solid polymer material is dispersed in the oily phase in a subdivided form, in an amount of between 5 and 70% by weight relative to the total weight of the mixture.

41. Cable according to any one of Claims 22 to 40, in which the self-repairing material also comprises an inorganic filler.

42. Cable according to Claim 41, in which the inorganic filler is selected from: kaolin, calcium carbonate, aluminium hydroxide, magnesium hydroxide, talc, precipitated silica, or mixtures thereof.

43. Cable according to Claim 41 or 42, in which the inorganic filler is present in amounts of between 5 and 50 parts by weight with respect to the total weight of the mixture.

44. Cable according to any one of Claims 22 to 43, in which the self-repairing material also comprises a tackifying agent.

45. Cable according to Claim 44, in which the tackifying agent is selected from: natural or synthetic rosins, or derivatives thereof; esterified polyalcohols; or mixtures thereof.

46. Cable according to Claim 44 or 45, in which the tackifying agent is present in amounts of between 1 and 20% by weight with respect to the total weight of the mixture.

47. Method for imparting to a cable comprising a conductor and at least one coating layer a capacity of self-repairing the coating layer, the said method comprising providing the cable with an inner layer comprising a material having the capacity, upon creation of a discontinuity in the coating layer, of re-establishing the continuity in the coating layer in a reversible manner.

48. Method according to Claim 47, in which the material of the inner layer is capable of at least partially filling the discontinuity without leaking from the cable in an uncontrolled manner.

49. Process for manufacturing a cable having a layer of self-repairing material, comprising the following steps:
(i) depositing the self-repairing material, maintained in a fluid state, on a cable core;
(ii) forming the said layer of self-repairing material so as to obtain a uniform layer of a predetermined thickness.

50. Process according to Claim 49, comprising the following steps:
- introducing an initial section of the cable core inside an application head through an inlet hole with a diameter which is slightly larger than the diameter of the cable core, and an outlet hole having a diameter which is predetermined according to the desired thickness of the layer of self-repairing material;
- feeding the application head with the self-repairing material maintained in a fluid state by preheating;
- passing the cable core through the application head so as to perform the deposition of the self-repairing material and the simultaneous forming of the layer of self-repairing material.

51. Process for manufacturing a cable having a layer of self-repairing material, in which the self-repairing material is extruded onto the cable core.

## Patentansprüche

1. Kabel, umfassend einen Leiter und mindestens eine Überzugsschicht, **dadurch gekennzeichnet, dass** die genannte Kabel eine Innenschicht umfasst, die ein selbstreparierendes Material umfasst, wobei das genannte selbstreparierende Material ein dielektrisches Material ist und eine Kohäsivkraft bei Raumtemperatur von mindestens 0,05 kg/cm² und ein gesteuertes Fließvermögen aufweist, das so beschaffen ist, dass eine Probe von ca. 3 g selbstreparierendem Material, das auf einer Aluminium-Platte ausgelegt wird, die mit 60° relativ zur Horizontalebene geneigt ist, und bei 60°C 24 h lang gehalten wird, eine Verschiebung der Materialfront entlang der geneigten Platte von 0,5 bis 400 mm ergibt.

2. Kabel gemäß Anspruch 1, worin das selbstreparierende Material eine dielektrische Härte unter Wechselstrom von größer als 15 kV/mm und einen Widerstand von 10¹⁴ Ω x cm aufweist.

3. Kabel gemäß Anspruch 2, worin das selbstreparierende Material eine dielektrische Härte unter Wechselstrom von größer als 20 kV/mm und einen Widerstand von größer als 10¹⁶ Ω x cm aufweist.

4. Kabel gemäß einem der vorhergehenden Ansprüche, worin das selbstreparierende Material eine Kohäsivkraft bei Raumtemperatur von 0,1 bis 4 kg/cm² aufweist.

5. Kabel gemäß Anspruch 4, worin das selbstreparierende Material eine Kohäsivkraft bei Raumtemperatur von 0,2 bis 2 kg/cm² aufweist.

6. Kabel gemäß einem der vorhergehenden Ansprüche, worin die Verschiebung der Front der selbstreparierenden Materialprobe entlang der geneigten Platte 1 bis 200 mm beträgt.

7. Kabel gemäß Anspruch 6, worin die Verschiebung der Front der selbstreparierenden Materialprobe entlang der geneigten Platte 50 bis 100 mm beträgt.

8. Kabel gemäß Anspruch 1, umfassend eine isolierende Überzugsschicht und einen Aussenschaft, **dadurch gekennzeichnet, dass** die Innenschicht zwischen der isolierenden Schicht und dem Aussenschaft angeordnet ist.

9. Kabel gemäß Anspruch 1, umfassend eine isolierende Überzugsschicht, **dadurch gekennzeichnet, dass** die Innenschicht zwischen dem Leiter und der isolierenden Schicht angeordnet ist.

10. Kabel gemäß Anspruch 1, umfassend mindestens 2 isolierende Überzugsschichten, **dadurch gekennzeichnet, dass** die Innenschicht zwischen zwei der genannten isolierenden Schichten angeordnet ist.

11. Kabel gemäß einem der vorhergehenden Ansprüche, worin der Leiter mit einer halbleitfähigen Schicht überzogen ist.

12. Kabel gemäß einem der vorhergehenden Ansprüche, welches auch einen expandierten Polymerüberzug umfasst.

13. Kabel gemäß Anspruch 12, worin der expandierte Polymerüberzug in direktem Kontakt mit einem äußeren Schutzschaft angeordnet ist.

14. Kabel gemäß einem der vorhergehenden Ansprüche, worin die Innenschicht eine Dicke von nicht weniger als 0,1 mm aufweist.

15. Kabel gemäß Anspruch 14, worin die Innenschicht eine Dicke von 0,2 bis 2 mm aufweist.

16. Kabel gemäß Anspruch 15, worin die Innenschicht eine Dicke von 0,3 bis 1 mm aufweist.

17. Kabel gemäß einem der vorhergehenden Ansprüche, worin das selbstreparierende Material einen Zusammenhalt hat, der so beschaffen ist, dass die bei Raumtemperatur gemessene Rekohäsionskraft einen Wert von nicht weniger als 80%, bezogen auf den Wert der am Material als solchem gemessenen Kohäsivkraft, aufweist.

18. Kabel gemäß Anspruch 17, worin die bei Raumtemperatur gemessene Rekohäsionskraft einen Wert von nicht weniger als 90%, bezogen auf den Wert der am Material als solchem gemessenen Kohäsivkraft, aufweist.

19. Kabel gemäß einem der vorhergehenden Ansprüche, worin das selbstreparierende Material einen Sättigungswassergehalt von weniger als 400 ppm aufweist.

20. Kabel gemäß Anspruch 19, worin das selbstreparierende Material einen Sättigungswassergehalt von weniger als 200 ppm aufweist.

21. Kabel gemäß einem der vorhergehenden Ansprüche, worin das selbstreparierende Material eine Permeabilität gegenüber Wasserdampf, gemessen bei Raumtemperatur gemäß ASTM E 96, von 1,2 x 10⁻⁷ bis 8,0 x 10⁻⁶ g/(cm x h x mmHg) aufweist.

22. Kabel gemäß einem der vorhergehenden Ansprüche, worin das selbstreparierende Material ein amorphes Polymer mit den Eigenschaften einer hochviskosen Flüssigkeit oder eines Halbfeststoffs umfasst.

23. Kabel gemäß Anspruch 22, worin das amorphe Polymer ausgewählt ist aus:
a) Polyisobuten- oder Isobuten-Copolymeren mit geringeren Mengen unterschiedlicher C₄₋₁₂-α-Olefine,
b) ataktischen Propylen-Homopolymeren und aus
c) Silicongummi, bestehend aus linearen Ketten von Monomer-Einheiten der Formel -O-SiR₁R₂-, worin R₁ und R₂ gegebenenfalls substituierte aliphatische oder aromatische Reste sind.

24. Kabel gemäß Anspruch 23, worin das amorphe Polymer Polyisobuten mit einem viskosimetrischen (Staudinger)-Durchschnittsmolekulargewicht von 2000 bis 50000 ist.

25. Kabel gemäß Anspruch 24, worin das amorphe Polymer Polyisobuten mit einem viskosimetrischen (Staudinger)-Durchschnittsmolekulargewicht von 5000 bis 20000 ist.

26. Kabel gemäß einem der Ansprüche 22 bis 25, worin das amorphe Polymer in einem Lösungsmittel gelöst ist.

27. Kabel gemäß Anspruch 26, worin das Lösungsmittel ein Mineral- oder Syntheseöl ist.

28. Kabel gemäß Anspruch 27, worin das Lösungsmittel ein Paraffinöl oder ein naphthenisches Öl ist.

29. Kabel gemäß Anspruch 26, worin das amorphe Polymer in einem Lösungsmittel gelöst ist, das ein niedermolekulares Homologes des amorphen Polymers ist.

30. Kabel gemäß Anspruch 29, worin das amorphe Polymer ein Polyisobuten aus Anspruch 23 oder 24 ist, das in einem Polybuten-Öl mit einem osmometrischen Durchschnittsmolekulargewicht von 400 bis 1300 gelöst ist.

31. Kabel gemäß Anspruch 30, worin das amorphe Polymer ein Silicongummi ist, der in einem Siliconöl mit einer Viskosität bei 25°C von 100 bis 5000 mm²/s gelöst ist.

32. Kabel gemäß einem der Ansprüche 26 bis 30, worin die Lösungsmittelmenge 5 bis 95 Gew.% beträgt, bezogen auf das Gesamtgewicht der Mischung.

33. Kabel gemäß Anspruch 32, worin die Lösungsmittelmenge 50 bis 90 Gew.% beträgt, bezogen auf das Gesamtgewicht der Mischung.

34. Kabel gemäß einem der Ansprüche 26 bis 33, worin das selbstreparierende Material auch ein Verdickungsmittel umfasst.

35. Kabel gemäß Anspruch 34, worin das Verdickungsmittel ausgewählt ist aus: pyrogenem Silika, Bentonit und aus Mischungen davon.

36. Kabel gemäß Anspruch 34 oder 35, worin das Verdickungsmittel in Mengen von 1 bis 20 Gew.Teilen zugefügt ist, bezogen auf das Gesamtgewicht der Mischung.

37. Kabel gemäß einem der Ansprüche 1 bis 21, worin das selbstreparierende Material ein festes Polymermaterial, dispergiert in einer Öl-Phase, umfasst.

38. Kabel gemäß Anspruch 37, worin die Öl-Phase ausgewählt ist aus:
a) paraffinischen oder naphthenischen Ölen,
b) Polybuten-Ölen mit einem osmometrischen Durchschnittsmolekulargewicht von 400 bis 1300,
c) Polypropylen-Ölen,
d) niedermolekularen Polyestern
oder aus Mischungen davon.

39. Kabel gemäß Anspruch 37 oder 38, worin das feste Polymermaterial ein hochmolekulares Polymer mit elastomeren Eigenschaften ist, ausgewählt aus:
i) Styrol-Blockcopolymeren oder -Terpolymeren mit unterschiedlichen Olefinen und/oder mit Dienen,
ii) Polyisobuten oder Copolymeren von Isobuten mit geringeren Mengen unterschiedlicher C₄₋₁₂-α-Olefine,
iii) Propylen-Copolymeren mit Ethylen und/oder mit C₄₋₁₂-α-Olefinen oder mit C₄₋₂₀-Dienen,
iv) Polyisopren oder Naturgummi
v) Nitrilgummi,
vi) Butylgummi,
vii) amorphen Ethylen-Copolymeren
oder aus Mischungen davon.

40. Kabel gemäß einem der Ansprüche 37 bis 39, worin das feste Polymermaterial in der Öl-Phase in unterteilter Form in einer Menge von 5 bis 70 Gew.%, bezogen auf das Gesamtgewicht der Mischung, dispergiert ist.

41. Kabel gemäß einem der Ansprüche 22 bis 40, worin das selbstreparierende Material auch einen anorganischen Füllstoff umfasst.

42. Kabel gemäß Anspruch 41, worin der anorganische Füllstoff ausgewählt ist aus: Kaolin, Calciumcarbonat, Aluminumhydroxid, Magnesiumhydroxid, Talkum, gefälltem Silika oder aus Mischungen davon.

43. Kabel gemäß Anspruch 41 oder 42, worin der anorganische Füllstoff in einer Menge von 5 bis 50 Gew.Teilen, bezogen auf das Gesamtgewicht der Mischung, vorhanden ist.

44. Kabel gemäß einem der Ansprüche 22 bis 43, worin das selbstreparierende Material auch ein Klebrigkeitsmittel umfasst.

45. Kabel gemäß Anspruch 44, worin das Klebrigkeitsmittel ausgewählt ist aus: natürlichem oder synthetischem Kolophonium oder Derivaten davon, veresterten Polyalkoholen oder aus Mischungen davon.

46. Kabel gemäß Anspruch 44 oder 45, worin das Klebrigkeitsmittel in einer Menge von 1 bis 20 Gew.%, bezogen auf das Gesamtgewicht der Mischung, vorhanden ist.

47. Verfahren zur Befähigung eines Kabels, das einen Leiter und mindestens eine Überzugsschicht umfasst, die Überzugsschicht selbst zu reparieren, wobei das genannte Verfahren umfasst, dass das Kabel mit einer Innenschicht versehen wird, die ein Material umfasst das, bei Auftritt einer Diskontinuität in der Überzugsschicht die Befähigung aufweist, die Kontinuität in der Überzugsschicht in reversibler Weise wiederherzustellen.

48. Verfahren gemäß Anspruch 47, worin das Material der Innenschicht dazu befähigt ist, zumindest teilweise die Diskontinuität zu füllen, ohne aus dem Kabel in unkontrollierter Weise zu lecken.

49. Verfahren zur Herstellung eines Kabels mit einer Schicht aus selbst-reparierendem Material, umfassend die folgenden Stufen:
i) Abscheidung des selbstreparierenden Materials, das in einem fluiden Zustand gehalten wird, auf einem Kabelkern,
ii) Bildung der genannten Schicht aus dem selbstreparierenden Material, um so eine einheitliche Schicht einer vorbestimmten Dicke zu erhalten.

50. Verfahren gemäß Anspruch 49, umfassend die folgenden Stufen:
- Einführung eines Anfangsabschnitts des Kabelkerns in das Innere eines Aufbringkopfes durch ein Einlassloch mit einem Durchmesser, der geringfügig größer als der Durchmesser des Kabelkerns ist, und mit einem Auslassloch mit einem Durchmesser, der gemäß der gewünschten Dicke der Schicht des selbstreparierenden Materials vorbestimmt ist,
- Befüllung des Aufbringkopfes mit dem selbstreparierenden Material, das in einem fluiden Zustand durch Vorerhitzen gehalten wird,
- Durchleiten des Kabelkerns durch den Aufbringkopf, um so die Abscheidung des selbstreparierenden Materials unter gleichzeitiger Bildung der Schicht aus dem selbstreparierenden Material durchzuführen.

51. Verfahren zur Herstellung eines Kabels mit einer Schicht aus selbstreparierendem Material, wobei das selbstreparierende Material auf den Kabelkern extrudiert wird.

## Revendications

1. Câble comprenant un conducteur et au moins une couche de revêtement, **caractérisé en ce que** ledit câble comprend une couche interne comprenant un matériau auto-cicatrisant, lequel matériau auto-cicatrisant est un matériau diélectrique et présente une force de cohésion à température ambiante d'au moins 0,05 kg/cm² et une aptitude à l'écoulement ajusté, telle que, pour un échantillon d'environ 3 grammes de matériau auto-cicatrisant placé sur une plaque d'aluminium inclinée à 60° par rapport au plan horizontal et maintenue à 60°C pendant 24 heures, le front de matériau se déplace de 0,5 à 400 mm le long de la plaque inclinée.

2. Câble selon la revendication 1, dans lequel le matériau auto-cicatrisant présente une rigidité diélectrique en courant alternatif supérieure à 15 kV/mm et une résistivité supérieure à 10¹⁴ Ω·cm.

3. Câble selon la revendication 2, dans lequel le matériau auto-cicatrisant présente une rigidité diélectrique en courant alternatif supérieure à 20 kV/mm et une résistivité supérieure à 10¹⁶ Ω·cm.

4. Câble selon l'une quelconque des revendications précédentes, dans lequel le matériau auto-cicatrisant présente une force de cohésion à température ambiante de 0,1 à 4 kg/cm².

5. Câble selon la revendication 4, dans lequel le matériau auto-cicatrisant présente une force de cohésion à température ambiante de 0,2 à 2 kg/cm².

6. Câble selon l'une quelconque des revendications précédentes, dans lequel le front de l'échantillon de matériau auto-cicatrisant se déplace de 1 à 200 mm le long de la plaque inclinée.

7. Câble selon la revendication 6, dans lequel le front de l'échantillon de matériau auto-cicatrisant se déplace de 50 à 100 mm le long de la plaque inclinée.

8. Câble selon la revendication 1, comprenant une couche de revêtement isolant et une gaine externe et **caractérisé en ce que** la couche interne est disposée entre la couche isolante et la gaine externe.

9. Câble selon la revendication 1, comprenant une couche de revêtement isolant et **caractérisé en ce que** la couche interne est disposée entre le conducteur et la couche isolante.

10. Câble selon la revendication 1, comprenant au moins deux couches de revêtement isolant et **caractérisé en ce que** la couche interne est disposée entre deux desdites couches isolantes.

11. Câble selon l'une quelconque des revendications précédentes, dans lequel le conducteur est revêtu d'une couche de semiconducteur.

12. Câble selon l'une quelconque des revendications précédentes, qui comprend également un revêtement de polymère expansé.

13. Câble selon la revendication 12, dans lequel le revêtement de polymère expansé est placé en contact direct avec une gaine externe protectrice.

14. Câble selon l'une quelconque des revendications précédentes, dans lequel la couche interne est épaisse d'au moins 0,1 mm.

15. Câble selon la revendication 14, dans lequel la couche interne est épaisse de 0,2 à 2 mm.

16. Câble selon la revendication 15, dans lequel la couche interne est épaisse de 0,3 à 1 mm.

17. Câble selon l'une quelconque des revendications précédentes, dans lequel le matériau auto-cicatrisant présente une cohésivité telle que la valeur de la force de recohésion mesurée à température ambiante n'est pas inférieure à 80 % de la valeur de la force de cohésion mesurée pour le matériau tel quel.

18. Câble selon la revendication 17, dans lequel la valeur de la force de recohésion mesurée à température ambiante n'est pas inférieure à 90 % de la valeur de la force de cohésion mesurée pour le matériau tel quel.

19. Câble selon l'une quelconque des revendications précédentes, dans lequel le matériau auto-cicatrisant présente une teneur en eau à saturation inférieure à 400 ppm.

20. Câble selon la revendication 19, dans lequel le matériau auto-cicatrisant présente une teneur en eau à saturation inférieure à 200 ppm.

21. Câble selon l'une quelconque des revendications précédentes, dans lequel le matériau auto-cicatrisant présente une perméabilité vis-à-vis de la vapeur d'eau, mesurée à température ambiante selon la norme ASTM E96, 1,2 x 10⁻⁷ à 8,0 x 10⁻⁶ g/(cm.heure.mmHg).

22. Câble selon l'une quelconque des revendications précédentes, dans lequel le matériau auto-cicatrisant comprend un polymère amorphe ayant les caractéristiques d'un liquide hautement visqueux ou d'un semi-solide.

23. Câble selon la revendication 22, dans lequel le polymère amorphe est choisi parmi :
(a) le polyisobutène ou les copolymères d'isobutadiène et de petites quantités de diverses α-oléfines en C₄-C₁₂ ;
(b) les homopolymères atactiques de propylène ;
(c) les caoutchoucs de silicone, constitués de chaînes linéaires ou de motifs monomère de formule -O-SiR₁R₂-, dans lesquels R₁ et R₂ représentent des groupes aliphatiques ou aromatiques éventuellement substitués.

24. Câble selon la revendication 23, dans lequel le polymère amorphe est un polyisobutène dont la masse molaire moyenne viscosimétrique (Staudinger) vaut de 2 000 à 50 000.

25. Câble selon la revendication 24, dans lequel le polymère amorphe est un polyisobutène dont la masse molaire moyenne viscosimétrique (Staudinger) vaut de 5 000 à 20 000.

26. Câble selon l'une quelconque des revendications 22 à 25, dans lequel le polymère amorphe est dissout dans un solvant.

27. Câble selon la revendication 26, dans lequel le solvant est une huile minérale ou une huile synthétique.

28. Câble selon la revendication 27, dans lequel le solvant est une huile paraffinique ou une huile naphténique.

29. Câble selon la revendication 26, dans lequel le polymère amorphe est dissout dans un solvant, qui est un homologue à faible masse molaire du polymère amorphe.

30. Câble selon la revendication 29, dans lequel le polymère amorphe est un polyisobutène conforme à la revendication 23 ou 24, dissout dans une huile de type polybutènique dont la masse molaire moyenne vaut de 400 à 1 300.

31. Câble selon la revendication 30, dans lequel le polymère amorphe est un caoutchouc de silicone dissout dans une huile de silicone dont la viscosité vaut de 100 à 5 000 mm²/sec à 25°C.

32. Câble selon l'une quelconque des revendications 26 à 30, dans lequel la quantité de solvant représente de 5 à 95 % du poids total du mélange.

33. Câble selon la revendication 32, dans lequel la quantité de solvant représente 50 à 90 % du poids total du mélange.

34. Câble selon l'une quelconque des revendications 26 à 33, dans lequel le matériau auto-cicatrisant contient également un épaississant.

35. Câble selon la revendication 34, dans lequel l'épaississant est choisi parmi : la silice pyrogène, la bentonite et leurs mélanges.

36. Câble selon la revendication 34 ou 35, dans lequel l'épaississant est ajouté en une quantité de 1 à 20 parties en poids par rapport au poids total du mélange.

37. Câble selon l'une quelconque des revendications 1 à 21, dans lequel le matériau auto-cicatrisant comprend un matériau polymère solide dispersé dans une phase huile.

38. Câble selon la revendication 37, dans lequel la phase huile est choisie parmi :
(a) les huiles paraffiniques ou naphténiques ;
(b) les huiles de type polybutènique dont la masse moléculaire moyenne osmométrique vaut de 400 à 1 300 ;
(c) les huiles de polypropylène ;
(d) les polyesters de faible masse molaire ;
et leurs mélanges.

39. Câble selon la revendication 37 ou 38, dans lequel le matériau solide polymère est un polymère de masse molaire élevée, présentant des propriétés d'élastomère, et choisi parmi :
(i) les copolymères ou terpolymères à blocs de styrène et de diverses oléfines et/ou de diènes ;
(ii) les polyisobutènes ou des copolymères d'isobutène et de petites quantités de diverses α-oléfines en C₄-C₁₂ ;
(iii) les copolymères de propylène et d'éthylène et/ou de α-oléfines en C₄-C₁₂ ou de diènes en C₄-C₂₀ ;
(iv) le polyisoprène ou du caoutchouc naturel ;
(v) les caoutchoucs nitrile ;
(vi) les caoutchoucs butyl ;
(vii) les copolymères amorphes d'éthylène ;
et leurs mélanges .

40. Câble selon l'une quelconque des revendications 37 à 39, dans lequel le matériau polymère solide est dispersé dans la phase huile sous une forme divisée, en une quantité représentant de 5 à 70 % du poids total du mélange.

41. Câble selon l'une quelconque des revendications 22 à 40, dans lequel le matériau auto-cicatrisant contient également une charge inorganique.

42. Câble selon la revendication 41, dans lequel la charge inorganique est choisie parmi : le kaolin, le carbonate de calcium, l'hydroxyde d'aluminium, l'hydroxyde de magnésium, le talc, la silice précipitée et leurs mélanges.

43. Câble selon la revendication 41 ou 42, dans lequel la charge inorganique se trouve en une quantité de 5 à 50 parties en poids par rapport au poids total du mélange.

44. Câble selon l'une quelconque des revendications 22 à 43, dans lequel le matériau auto-cicatrisant comprend également un agent d'adhésivité.

45. Câble selon la revendication 44, dans lequel l'agent d'adhésivité est choisi parmi : les colophanes synthétiques ou naturelles, ou des dérivés de celles-ci, des polyalcools, ou leurs mélanges.

46. Câble selon la revendication 44 ou 45, dans lequel l'agent d'adhésivité se trouve en une quantité représentant de 1 à 20 % du poids total du mélange.

47. Procédé permettant de conférer à un câble, comprenant un conducteur et au moins une couche de revêtement, un pouvoir d'auto-cicatrisation de la couche de revêtement, lequel procédé comporte le fait de prendre un câble muni d'une couche interne, qui comprend un matériau possédant, le pouvoir à la suite de la formation d'une discontinuité dans la couche de revêtement, de ré-établir la continuité de la couche de revêtement de manière réversible.

48. Procédé selon la revendication 47, dans lequel le matériau de la couche interne est capable de combler, au moins partiellement, ladite discontinuité sans fuir du câble de façon non maîtrisée.

49. Procédé de fabrication d'un câble comportant une couche de matériau auto-cicatrisant, lequel procédé comporte les étapes suivantes :
(i) déposer le matériau auto-cicatrisant, maintenu dans un état fluide sur une âme de câble ;
(ii) former une couche de ce matériau auto-cicatrisant de manière à obtenir une couche uniforme d'une épaisseur prédéterminée.

50. Procédé selon la revendication 49, qui comporte les étapes suivantes :
- introduire une section initiale de l'âme du câble à l'intérieur d'une tête d'application, en la faisant passer par un orifice d'entrée, dont le diamètre est légèrement plus grand que le diamètre de l'âme du câble, et par un orifice de sortie dont le diamètre a une valeur préétablie en fonction de l'épaisseur voulue pour la couche de matériau auto-cicatrisant ;
- amener dans la tête d'application le matériau auto-cicatrisant maintenu dans un état fluide par préchauffage ;
- faire passer l'âme du câble dans la tête d'application de manière à déposer dessus le matériau auto-cicatrisant et à former simultanément la couche de matériau auto-cicatrisant.

51. Procédé de fabrication d'un câble ayant une couche de matériau auto-cicatrisant, dans lequel le matériau auto-cicatrisant est déposé par extrusion sur l'âme du câble.
